# FASCICULE DE BREVET EUROPEEN

(11) **EP 2 804 125 B1**
(45) Date de publication et mention de la délivrance du brevet: **26.04.2017**
(21) Numéro de dépôt: 14168212.0
(22) Date de dépôt: 14.05.2014
(51) Int. Cl.: G06F 21/31, G06F 21/83

(54) **Dispositif de saisie d'un code d'authentification**
Vorrichtung zum Erfassen eines Authentifizierungscodes
Device for entering an authentication code

(30) Priorité: 15.05.2013 FR 1354344
(43) Date de publication de la demande: 19.11.2014
(73) Titulaire: Oberthur Technologies, 92700 Colombes (FR)
(72) Inventeur: Barreau, Cédric, 92700 Colombes (FR)
(74) Mandataire: Perrot, Emilie

(56) Documents cités:
- WO-A1-2012/131420
- Charlie Sorrel: "USB Multi-Touch Pad and Numeric Keyboard Mashup", , 9 octobre 2009 (2009-10-09), XP055084069, Extrait de l'Internet: URL:http://web.archive.org/web/20091011222 836/http://www.wired.com/gadgetlab/2009/10 /usb-multi-touch-pad-and-numeric-keyboard- mashup/ [extrait le 2013-10-15]
- DAVID GRAWROCK: "The Intel Safer Computing Initiative. Building Blocks for Trusted ComputiNG", INTERNET CITATION, 1 janvier 2006 (2006-01-01), page 282pp, XP007913877, Extrait de l'Internet: URL:http://files.rsdn.ru/19450/SECC_100Val idation.pdf [extrait le 2010-07-12]
- Tom Anonymous: "Unable to login - mouse and keyboard does not work", , 14 March 2013 (2013-03-14), XP055243568, Retrieved from the Internet: URL:https://web.archive.org/web/2013031417 2926/http://www.tomshardware.co.uk/forum/4 791-73-unable-login-mouse-keyboard-work [retrieved on 2016-01-21]
- Anonymous: "Pair bluetooth keyboard when not logged in", , 12 March 2013 (2013-03-12), XP055243570, Retrieved from the Internet: URL:https://web.archive.org/web/2013031205 3953/http://apple.stackexchange.com/questi ons/42116/pair-bluetooth-keyboard-when- not-logged-in [retrieved on 2016-01-21]

## Description

La présente invention concerne un dispositif de saisie d'un code d'authentification. Un dispositif de saisie d'un code d'authentification est d'usage courant dans les systèmes informatiques afin d'authentifier un utilisateur et, en cas d'authentification positive, autoriser ledit utilisateur à accéder à certaines fonctions d'un système. Un tel code d'authentification peut ainsi être un mot de passe permettant d'accéder à un compte, ou encore un code PIN permettant d'authentifier un porteur de carte à microcircuit, telle une carte bancaire ou une carte d'abonnement téléphonique SIM.

Un tel dispositif comprend typiquement un moyen de capture, tel un clavier, connecté à une unité de traitement, permettant à l'utilisateur de saisir ledit code d'authentification.

Il est cependant apparu des menaces, visant à dérober un tel code d'authentification, par observation. Cette observation peut être une observation visuelle de l'utilisateur pendant l'opération de saisie, par exemple au moyen d'une caméra vidéo, soit encore une observation électronique visant à espionner des données échangées entre le moyen de capture et l'unité de traitement. Dans ces deux cas l'attaque met à profit une connaissance du moyen de capture le plus souvent standard, tant dans sa cartographie et son affectation que dans le codage des données qu'il échange avec l'unité de traitement.

Il est recherché des dispositifs de saisie aptes à résister à de telles menaces.

WO2012/131420 divulgue un système et un procédé pour obtenir un clavier dynamique virtuel présentant une disposition QWERTY ou aléatoire affichée sur une interface utilisateur afin d'autoriser un utilisateur à entrer une information d'authentification dans un champ donné. Un premier caractère et un second caractère sont intervertis, leurs positions étant mémorisées.

XP055084069 divulgue une dalle tactile émulée par une carte à microcircuit.

XP007913877 divulgue un périphérique USB de confiance.

L'invention a pour objet un dispositif de saisie d'un code d'authentification, tel que défini dans les revendications, le dispositif comprenant une unité de traitement, un moyen d'affichage connecté à l'unité de traitement et un moyen de capture connectable à l'unité de traitement, où le moyen de capture est amovible et fourni par un émetteur de confiance.

Selon une autre caractéristique, le moyen de capture
comprend un clavier, un dispositif électronique comprenant un clavier, tel un téléphone, un PDA, un ordinateur, un dispositif électronique apte à émuler un clavier, tel un téléphone à écran tactile ou une tablette PC, ou un dispositif électronique comprenant des touches/boutons, tel un lecteur MP3 ou une manette de jeu.

Selon une autre caractéristique, le moyen de capture comprend m zones distinctes, où l'unité de traitement est apte à affecter n caractères, comprenant au moins les caractères contenus dans le code d'authentification, à n parmi m zones du moyen de capture, et où l'unité de traitement est encore apte à afficher sur le moyen d'affichage une représentation de l'affectation desdits n caractères aux n parmi m zones du moyen de capture.

Selon une autre caractéristique, le moyen de capture comprend une carte à microcircuit équipée d'une matrice tactile.

Selon une autre caractéristique, le moyen de capture est apte à indiquer à l'unité de traitement une cartographie de ses m zones.

Selon une autre caractéristique, l'unité de traitement est encore apte à afficher une représentation d'une cartographie des m zones du moyen de capture sur le moyen d'affichage, en relation avec la représentation de l'affectation.

Selon une autre caractéristique, l'affectation des n caractères aux n parmi m zones du moyen de capture est modifiée après chaque saisie, après un nombre donné de saisies, ou après une durée donnée.

Selon une autre caractéristique, l'affectation des n caractères aux n parmi m zones du moyen de capture est produite aléatoirement.

Selon une autre caractéristique, le moyen de capture est un moyen sécurisé.

Selon une autre caractéristique, le moyen de capture est connectable à l'unité de traitement via une liaison sécurisée.

Selon une autre caractéristique, l'unité de traitement est encore apte à réaliser une authentification du moyen de capture, avant toute opération liée à la saisie.

Selon une autre caractéristique, le moyen de capture est apte à réaliser une authentification de l'unité de traitement, avant toute opération liée à la saisie.

D'autres caractéristiques, détails et avantages de l'invention ressortiront plus clairement de la description détaillée donnée ci-après à titre indicatif en relation avec des dessins sur lesquels :
- la figure 1 présente un schéma d'ensemble d'un dispositif de saisie selon l'invention,
- la figure 2 illustre plus particulièrement l'affectation de caractères aux zones d'un moyen de capture,
- la figure 3 illustre un lecteur MP3 utilisé comme moyen de capture,
- la figure 4 illustre une carte à microcircuit utilisée comme moyen de capture,
- la figure 5 illustre l'affectation de caractères aux touches d'un lecteur MP3,
- la figure 6 illustre l'affectation de caractères aux zones d'une matrice sensible d'une carte à microcircuit.

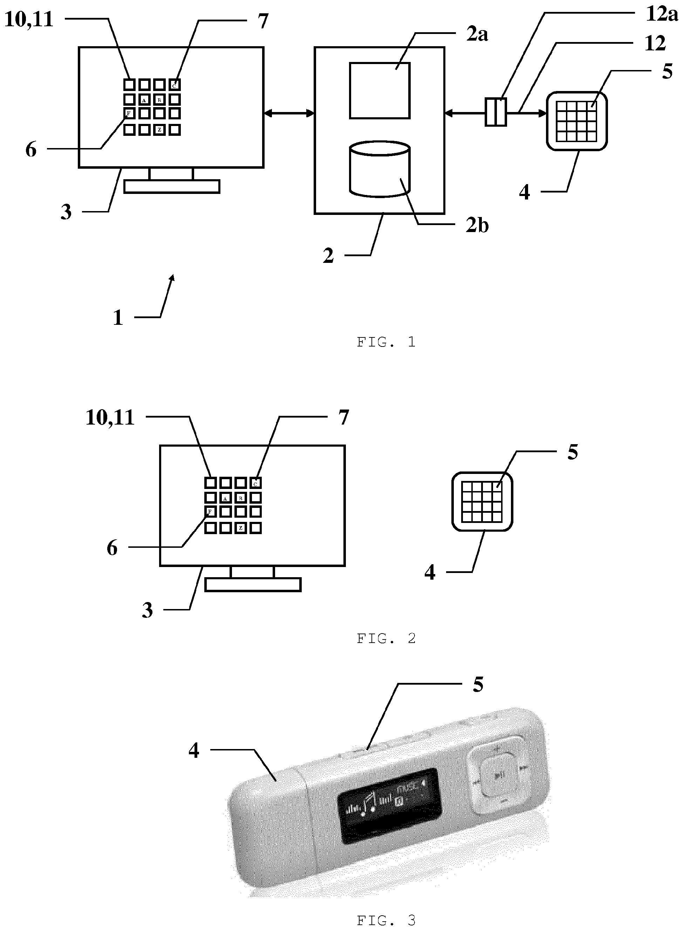

Selon la figure 1, un dispositif 1 de saisie d'un code d'authentification, comprend typiquement une unité de traitement 2, apte à piloter le dispositif 1 et à réaliser les traitements, un moyen d'affichage 3 connecté à l'unité de traitement 2, utilisable par cette dernière comme périphérique de sortie, et un moyen de capture 4 connectable à l'unité de traitement 2, utilisable par cette dernière comme périphérique d'entrée.

Un tel dispositif 1 est typiquement utilisé selon le procédé suivant. L'utilisateur indique au dispositif une valeur d'un code d'authentification, le cas échéant en réponse à une invitation du dispositif 1, par exemple affichée sur le moyen d'affichage 3. La valeur du code d'authentification est entrée dans le dispositif 1 via un moyen de capture 4. L'unité de traitement 2 comprend typiquement un processeur 2a apte à réaliser les traitements et une mémoire 2b. L'unité de traitement 2 compare la valeur indiquée par l'utilisateur ainsi capturée à une valeur de référence du code d'authentification préalablement stockée en mémoire 2b. Si les deux valeurs sont identiques le dispositif 1 valide l'authentification et autorise ou fait autoriser l'action/la fonction protégée par cette authentification.

Un tel dispositif 1 est présent et utilisé par de nombreux systèmes, tel un portier électronique, un système informatique, un distributeur de billets ou encore un téléphone cellulaire lorsqu'il vérifie un code PIN d'une carte SIM.

Une des menaces constatée est liée au moyen de capture 4. Les dispositifs selon l'art antérieur comprennent le plus souvent un moyen de capture 4 comprenant un clavier 4 intégré au dispositif 1. L'affectation des caractères 6 aux zones/touches dudit clavier 4 est constante et le plus souvent indiquée sur le clavier ou sur les touches elles-mêmes.

Les menaces redoutées consistent en une observation de l'utilisateur lorsqu'il entre un code d'authentification, afin de connaitre ledit code. Cette observation peut être visuelle. En voyant sur quelle touche du clavier 4 l'utilisateur appuie, il est possible de déduire le caractère du code d'authentification. Un autre mode d'observation est l'espionnage des données échangées entre le moyen de capture 4 et l'unité de traitement 2. Le fait que ces données soient systématiquement les mêmes dans le temps, facilite leur décodage pour déterminer le code d'authentification.

Afin de rendre plus difficiles ou totalement inopérantes ces menaces, selon une caractéristique importante de l'invention, le dispositif 1 comprend une partie « publique » comprenant tous les composants du dispositif 1 à l'exclusion d'un moyen de capture 4 et une partie « privée » comprenant le moyen de capture 4. Pour cela le moyen de capture 4 est amovible du reste du dispositif 1 et est fourni par un émetteur de confiance. Cet émetteur de confiance permet de garantir l'authenticité et l'intégrité du moyen de capture 4.

Un émetteur de confiance préférentiel est l'utilisateur lui-même qui apporte son moyen de capture 4 et le connecte au dispositif 1 lorsqu'il souhaite entrer son code d'authentification. Dans ce cas la certification du moyen de capture 4 est garantie à l'utilisateur, par l'utilisateur lui-même, en ce qu'il ne se dessaisit pas du moyen de capture 4, dont il peut ainsi être certain.

La caractéristique d'amovibilité permet de faire fonctionner le dispositif 1 avec différents types de moyen de capture 4 et complique ainsi la tâche d'observation.

Ceci suppose que la partie publique du dispositif 1 propose une interface de liaison 12 avec le moyen de capture 4, ledit moyen de capture 4 disposant d'une interface de liaison compatible. Cette interface de liaison 12 peut être filaire avec un connecteur 12a partagé entre le moyen de capture 4 et l'unité de traitement 2 permettant de sélectivement connecter ou déconnecter le moyen de capture 4 du reste du dispositif. Cette interface de liaison 12 peut encore être sans fil, l'unité de traitement 2 et le moyen de capture 4 comprenant des moyens de communication sans fil compatibles.

Le moyen de capture 4 peut prendre différentes formes. Ainsi, selon un premier mode de réalisation, le moyen de capture 4 est un clavier. Dans ce mode de réalisation, le clavier est un dispositif passif. Un avantage de ce mode de réalisation est sa simplicité. Un inconvénient de ce mode de réalisation est qu'un utilisateur est obligé de transporter un clavier, qui ne sert que pour l'authentification.

Selon un autre mode de réalisation, le moyen de capture 4 est un dispositif électronique comprenant un clavier. Il peut s'agir d'un clavier « actif » le dispositif électronique gérant le clavier et la liaison avec l'unité de traitement 2 de manière intelligente. Il peut encore de manière avantageuse s'agir d'un dispositif électronique déjà en possession de l'utilisateur, tel un téléphone, un PDA, un ordinateur, ou tout autre dispositif équivalent équipé d'un clavier. Ainsi le dispositif 1 réutilise avantageusement un dispositif déjà possédé par l'utilisateur.

Selon un autre mode de réalisation, le moyen de capture 4 est un dispositif électronique apte à émuler un clavier. Dans cette catégorie on trouve, par exemple, les dispositifs équipé d'un écran tactile et d'une certaine intelligence, tel qu'un téléphone à écran tactile ou encore une tablette PC. Ces dispositifs comprennent déjà le plus souvent une application d'émulation d'un clavier numérique ou alphanumérique.

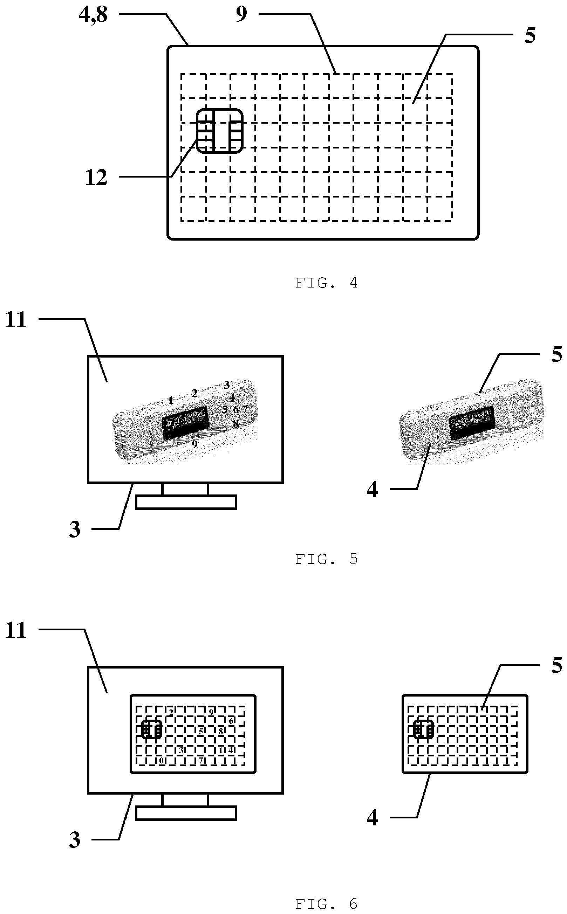

Dans cette catégorie, on peut trouver, selon un mode de réalisation préférentiel, illustré à la figure 4, un moyen de capture 4 comprenant une carte à microcircuit 8 équipée d'une matrice tactile 9. La matrice tactile 9 est par exemple apposée sur la surface de la carte 8 et permet de détecter un appui et sa localisation et ainsi d'émuler un clavier. Ce clavier est géré par le microcircuit de la carte 8. Un tel moyen de capture 4 s'interface à l'unité de traitement 2 du dispositif 1, via le microcircuit, au moyen des interfaces de communication de la carte à microcircuit 8. Selon le type de carte, ce peut être une liaison avec contact via la plaque de contact 12 de la carte à microcircuit 8 ou encore une liaison sans fil, pour une carte à microcircuit 8 équipée d'une antenne.

Selon un autre mode de réalisation, le moyen de capture 4 est un dispositif électronique comprenant des touches/boutons 5. Pour peu que ces touches/boutons 5 puisse être réaffectées par ledit dispositif électronique il est possible de réaliser un moyen de capture 4. Un moyen de capture 4 de cette catégorie est par exemple un lecteur MP3, pour peu qu'il comporte suffisamment de boutons 5 sur sa face parlante. Une manette de jeu, du type de celles utilisées pour les consoles de jeu, comporte de nombreux boutons et peut devenir un tel moyen de capture 4. Un récepteur GPS peut encore être inclus dans cette catégorie.

Pour pouvoir être utilisé pour capturer un code d'authentification, le moyen de capture 4 comprend avantageusement m zones 5 distinctes. L'unité de traitement 2 est apte à détecter lorsqu'une zone 5 est actionnée par l'utilisateur et à identifier quelle zone 5 est actionnée. Selon le type d'interface entre le moyen de capture 4 et l'unité de traitement 2 cette détection et cette identification peuvent prendre différentes formes. Ainsi dans le cas d'un dispositif passif, tel un clavier directement interfacé à l'unité de traitement 2, l'unité de traitement 2 est apte à détecter une connexion dans la matrice du clavier et sa position. Dans le cas d'un dispositif actif, plus intelligent, le moyen de capture comprend une unité électronique apte à réaliser la détection/identification. Cette unité transmet typiquement ensuite un message, indiquant quelle zone 5 a été actionnée, à l'unité de traitement 2.

Chacune desdites m zones 5 distinctes est actionnable par l'utilisateur, son actionnement étant détectable et identifiable par l'unité de traitement 2.

L'unité de traitement 2 est apte à affecter n caractères 6 à n parmi m zones 5 du moyen de capture 4. L'actionnement d'une zone 5 produit toujours pour l'unité de traitement 2 une même réponse, un même codage ou message, cependant, le sens que lui donne l'unité de traitement 2, soit le caractère 6 que l'unité de traitement 2 associe à une zone 5 donnée est variable. L'ensemble des n associations caractère 6 / zone 5 est encore appelé affectation 7.

Afin qu'un utilisateur puisse entrer son code d'authentification, les n caractères 6 affectés au n parmi m zones 5, comprennent au moins les caractères contenus dans le code d'authentification de référence. D'autres caractères 6 additionnels sont avantageusement ajoutés pour compliquer une tentative de découverte du code par essais successifs et pour offrir une plus grande variété de codes d'authentification possibles.

Ainsi par exemple pour un code uniquement numérique ne comprenant que des chiffres, les caractères 6 affectés comprennent un ensemble comprenant tout ou partie des chiffres de « 0 » à « 9 », ledit ensemble incluant au moins les caractères du code d'authentification.

Le moyen de capture 4 comprend m zones. Le nombre m est au moins égal au nombre n de caractères 6. Si m est plus grand que n certaines zones 5 restent non affectées et inutilisées. Cependant cette inutilisation crée une diversité utile à compliquer la tâche d'un éventuel observateur. De plus dans le cas d'une affectation dynamique, telle que décrite plus avant, cette diversité augmente le nombre d'affectations 7 possibles.

Le moyen de capture 4 est avantageusement muet selon l'invention. Ceci complique une observation. Afin d'informer l'utilisateur de l'affectation 7, afin qu'il puisse actionner une zone 5 du moyen de capture 4 correspondant à un caractère 6 du code d'authentification qu'il souhaite saisir, cette affectation 7 est avantageusement affichée sur le moyen d'affichage 3. Pour cela l'unité de traitement 2 est encore apte à afficher sur le moyen d'affichage 3 une représentation 7 de l'affectation.

Afin de permettre la saisie d'un code d'authentification, une affectation 7 emploie un jeu de caractères 6. Ces caractères 6 comprennent au moins les caractères 6 composant le code d'authentification. Ces caractères 6 peuvent être numériques, alphanumérique ou encore tout autre dessin ou symbole. Le jeu de caractères 6 peut encore comprendre des caractères de contrôle et/ou d'édition, tels que Entrée/Validation, BackSpace, Delete, <-, ->, etc... Ces caractères de contrôle ne sont pas affectés à des caractères formant un code d'authentification, mais permettent au cours de la saisie d'éditer/corriger une saisie des caractères 6.

Telle qu'illustrée aux figures 2, 5 et 6, montrant un moyen d'affichage 3 à gauche de la figure, en relation avec un moyen de capture 4 à droite de la figure, une affectation 7 définit quel caractère 6 est affecté à quelle zone 5 du moyen de capture 4.

Dans l'exemple illustré à la figure 2, le moyen de capture 4 comprend seize zones 5 organisées en quatre rangées de quatre colonnes. Si l'on repère une zone par son numéro de ligne et son numéro de colonne, la zone référencée 5 est la zone (1,4). Le moyen de capture 4 est typiquement muet en ce qu'il ne comporte aucun repère ou indication relative au caractère 6 affecté à une zone 5. L'affectation 7 est définie par l'unité de traitement 2. Dans l'exemple illustré, cinq caractères 6 différents : « A », « B », « C », « F » et « Z » sont affectés à cinq parmi les seize zones 5, respectivement : (2,2), (2,3), (1,4), (3,1) et (4,3). Les onze autres zones 5 restantes ne se voient affecter aucun caractère 6.

Afin d'informer l'utilisateur, une représentation 7 de ladite affectation est affichée, sur le moyen d'affichage 3. Cette représentation 7 figure une cartographie 10 figurative de la disposition du moyen de capture 4 comprenant seize carrés figurant chacun une zone 5, organisés en quatre rangées de quatre colonnes. Le caractère 6 affecté à une zone 5 donnée est inscrit en relation avec la représentation de la zone 5 à laquelle il est affecté.

Ainsi, avantageusement, même si un observateur voit le moyen de capture 4, mais pas le moyen d'affichage 3, il ne sait quel caractère 6 est sélectionné lors de la saisie du code.

L'utilisateur, lors de la saisie d'un code d'authentification, actionne les zones 5 du moyen de capture 4, en fonction des caractères 6 associés auxdites zones 5. L'unité de traitement 2 reçoit alors du moyen de capture 4 les informations identifiant quelle zones 5 ont été actionnées et peut les interpréter en caractères 6 en fonction de la correspondance établie par l'affectation 7.

Ainsi, en référence à la figure 2, pour par exemple saisir un code « BZ », un utilisateur sait qu'il doit actionner, sur le moyen de capture 4, successivement la zone associée au « B » et la zone associée au « Z ». Pour déterminer quelles sont ces zones, il consulte la représentation 7 de l'affectation telle qu'affichée sur le moyen d'affichage 3, et sait qu'il doit actionner la zone (2,3) suivie de la zone (4,3).

Il a été vu que le moyen de capture 4 est avantageusement variant dans son type et dans sa forme et ainsi aussi dans l'organisation ou cartographie 10 de ses m zones 5.

Ainsi le moyen de capture 4 des figures 1 et 2 est une matrice 4x4 plane. Le moyen de capture 4 des figures 4 et 6 est une matrice 6x11 plane. Le moyen de capture 4 des figures 3 et 5 comprend neuf zones 5 réparties sur toute son enveloppe de manière tridimensionnelle.

Afin de définir une affectation 7 de caractères 6 à un moyen de capture 4, l'unité de traitement 2 doit disposer d'une cartographie 10 des m zones 5 dudit moyen de capture 4. Une telle cartographie 10 est représentative de la disposition relative des zones 5 et figure ainsi au moins schématiquement le moyen de capture 4.

Selon un mode de réalisation, afin que l'unité de traitement 2 puisse connaitre cette cartographie 10, afin de définir une affectation 7, le moyen de contrôle 4 indique cette cartographie 10 à l'unité de traitement 2. Dans le cas notamment d'un moyen de capture 4 passif, cette indication peut être réalisé par un moyen indirect, tel un indicateur de type, renvoyant à une cartographie type prédéfinie dans la mémoire 2b de l'unité de traitement 2.

Un tel indicateur de type peut être codé électriquement, signalé par le type de connecteur 12a utilisé pour connecter le moyen de capture 4 à l'unité de traitement 2. Un tel indicateur de type peut encore être communiqué au moyen d'une étiquette RFID.

Dans le cas d'un moyen de capture 4 actif, disposant d'une certaine intelligence, il est possible de transmettre un message plus complexe où même d'établir un dialogue entre le moyen de capture 4 et l'unité de traitement 2 afin de fournir cette indication de cartographie 10. Cette indication peut être une indication de type comme précédemment. Cette indication peut encore être plus détaillée en fournissant une image 2D ou 3D indiquant la forme du moyen de capture 4 et les positions des différentes zones 5. Ceci permet à un moyen de capture 4 totalement inconnu de l'unité de traitement 2 de s'interfacer avec elle pour former un dispositif 1, après avoir défini et transmis sa cartographie 10.

Cette indication d'une cartographie 10 peut encore comprendre une photographie du moyen de capture 4. Ceci est avantageux pour un moyen de capture 4 de forme complexe afin de permettre l'affichage d'une représentation 11 de la cartographie 10 sur le moyen d'affichage 3 qui soit signifiante pour l'utilisateur.

Les figures 2, 5, 6 illustrent pour différents moyens de capture 4, une représentation 11 de leur cartographie 10 de zones 5 sur le moyen d'affichage 3.

La représentation 11 de la cartographie 10 peut ainsi être affichée par l'unité de traitement 2 sur le moyen d'affichage 3. Ainsi l'unité de traitement 2 peut, en superposition d'une représentation 11 de la cartographie 10 des m zones 5 du moyen de capture 4 sur le moyen d'affichage 3, afficher une représentation 7 de l'affectation. Cet affichage complet permet à l'utilisateur de former un modèle mental du moyen de capture 4 affecté de caractères 6, lui permettant de savoir quelle zone 5 actionner sur le moyen de capture 4, ladite zone 5 ne comportant pas d'indication du caractère 6 affecté, pour entrer un caractère 6 choisi, à l'attention de l'unité de traitement 2.

L'affectation des n caractères 6 aux n parmi m zones 5 du moyen de capture 4 peut être statique en ce qu'elle ne change pas une fois définie. Cependant, afin de compliquer encore la tâche d'un observateur, l'affectation 7 des n caractères 6 aux n parmi m zones 5 du moyen de capture 4 est avantageusement dynamique en ce qu'elle évolue dans le temps. Selon un mode de réalisation, l'affectation 7 est modifiée après chaque saisie. Ce mode est le plus sûr. Selon un autre mode de réalisation, l'affectation 7 est modifiée, après un nombre donné de saisies, ou encore après une durée donnée. Selon une variante de ce deuxième mode de réalisation, il est possible de n'afficher l'affectation 7 à l'attention de l'utilisateur que lors de la ou des p premières utilisations après un changement de l'affectation 7, ou encore sur requête de l'utilisateur, l'utilisateur mémorisant alors l'affectation 7. Cette variante, contraignante pour l'utilisateur augmente la sécurité du dispositif 1 en ce que les affichages de l'affectation 7 sont moins fréquents.

Avantageusement, une affectation 7 des n caractères 6 aux n parmi m zones 5 du moyen de capture 4 est produite aléatoirement, par exemple au moyen d'un algorithme de génération pseudo-aléatoire.

Selon un mode de réalisation, le moyen de capture 4 peut être « actif » en ce qu'il comporte une unité de traitement additionnelle. Dans ce cas tout ou partie des fonctions décrites précédemment comme réalisées par l'unité de traitement 2, peuvent en tout ou partie être réalisées par ladite unité de traitement additionnelle associée au moyen de capture 4.

Ainsi par exemple le calcul qui détermine une affectation 7 des n caractères 6 aux n parmi m zones 5 du moyen de capture 4 peut être réalisé, au choix, par l'unité de traitement 2 située sur le dispositif 1, par l'unité de traitement additionnelle située sur le moyen de capture 4, ou par une coopération des deux.

Avantageusement le moyen de capture 4 est un moyen sécurisé. Il est entendu ici par moyen sécurisé, un moyen dont la susceptibilité vis-à-vis d'une observation est optimisée, tel par exemple un moyen dont les émissions radiofréquences non désirées sont réduites, afin de réduire la possibilité d'une observation à distance.

Avantageusement encore, la liaison 12 reliant le moyen de capture 4 à l'unité de traitement 2 est une liaison sécurisée. Il est entendu ici par liaison sécurisé, une liaison dont la susceptibilité, tant physique que logique, vis-à-vis d'une observation est optimisée, par exemple au moyen d'un câble blindé, d'une liaison hertzienne de portée réduite ou encore directionnelle, et/ou mettant en oeuvre un protocole d'échange crypté.

Le fait que le moyen de capture 4 soit amovible induit l'existence d'une interface, tant sur le moyen de capture 4 que sur l'unité de traitement 2. Afin de protéger le dispositif 1 contre une tentative d'effraction via cette interface, il est avantageusement ajouté au moins une procédure d'authentification. Une telle procédure d'authentification peut être réalisée par toute technique cryptographique, typiquement par échange/vérification d'au moins une clé secrète.

Ainsi, selon un mode de réalisation, visant à protéger l'unité de traitement 2, l'unité de traitement 2 est encore apte à réaliser une authentification du moyen de capture 4, avant toute opération liée à la saisie. Cette authentification prend typiquement place lors de la connexion du moyen de capture 4 à l'unité de traitement 2.

Selon un autre mode de réalisation, visant à protéger le moyen de capture 4, le moyen de capture 4 est apte à réaliser une authentification de l'unité de traitement 2, avant toute opération liée à la saisie. Cette authentification, possible principalement pour un moyen de capture 4 actif, prend typiquement place lors de la connexion du moyen de capture 4 à l'unité de traitement 2.

Une authentification mutuelle, du moyen de capture 4 par l'unité de traitement 2 et de l'unité de traitement 2 par le moyen de capture 4, est encore possible et préférée.

## Revendications

1. Dispositif (1) de saisie d'un code d'authentification, comprenant une unité de traitement (2), un moyen d'affichage (3) connecté à l'unité de traitement (2) et un moyen de capture (4) connectable à l'unité de traitement (2),
le moyen de capture (4) comprenant m zones (5) distinctes actionnables de manière détectable et identifiable par l'unité de traitement (2),
l'unité de traitement (2) étant apte à affecter n caractères (6), comprenant au moins les caractères contenus dans le code d'authentification, à n parmi m zones (5) du moyen de capture (4), et
l'unité de traitement (2) étant encore apte à afficher sur le moyen d'affichage (3) une représentation (7) de l'affectation desdits n caractères (6) aux n parmi m zones (5) du moyen de capture (4),
ledit dispositif (1) étant ***caractérisé en ce que*** le moyen de capture (4) est amovible et fourni par un utilisateur du dispositif pendant l'utilisation,
le moyen de capture (4) étant apte à indiquer à l'unité de traitement (2) une cartographie (10) de ses m zones (5).

2. Dispositif selon la revendication 1, où le moyen de capture (4) comprend un clavier, un dispositif électronique comprenant un clavier, tel un téléphone, un PDA, un ordinateur, un dispositif électronique apte à émuler un clavier, tel un téléphone à écran tactile ou une tablette PC, ou un dispositif électronique comprenant des touches/boutons, tel un lecteur MP3 ou une manette de jeu.

3. Dispositif selon la revendication 1 ou 2, où le moyen de capture (4) comprend une carte à microcircuit (8) équipée d'une matrice tactile (9).

4. Dispositif selon l'une quelconque des revendications 1 à 3, où l'unité de traitement (2) est encore apte à afficher une représentation (11) d'une cartographie (10) des m zones (5) du moyen de capture (4) sur le moyen d'affichage (3), en relation avec la représentation (7) de l'affectation.

5. Dispositif selon l'une quelconque des revendications 1 à 4, où l'affectation (7) des n caractères (6) aux n parmi m zones (5) du moyen de capture (4) est modifiée après chaque saisie, après un nombre donné de saisies, ou après une durée donnée.

6. Dispositif selon l'une quelconque des revendications 1 à 5, où l'affectation (7) des n caractères (6) aux n parmi m zones (5) du moyen de capture (4) est produite aléatoirement.

7. Dispositif selon l'une quelconque des revendications 1 à 6, où le moyen de capture (4) est un moyen sécurisé.

8. Dispositif selon l'une quelconque des revendications 1 à 7, où le moyen de capture (4) est connectable à l'unité de traitement (2) via une liaison (12) sécurisée.

9. Dispositif selon l'une quelconque des revendications 1 à 8, où l'unité de traitement (2) est encore apte à réaliser une authentification du moyen de capture (4), avant toute opération liée à la saisie.

10. Dispositif selon l'une quelconque des revendications 1 à 9, où le moyen de capture (4) est apte à réaliser une authentification de l'unité de traitement (2), avant toute opération liée à la saisie.

## Patentansprüche

1. Vorrichtung (1) zur Erfassung eines Authentifizierungscodes, umfassend eine Verarbeitungseinheit (2), ein Anzeigemittel (3), das an die Verarbeitungseinheit (2) angeschlossen ist, und ein Erfassungsmittel (4), das an die Verarbeitungseinheit (2) anschließbar ist,
wobei das Erfassungsmittel (4) m getrennte Zonen (5) umfasst, die auf von der Verarbeitungseinheit (2) erfassbare und identifizierbare Weise betätigbar sind,
wobei die Verarbeitungseinheit (2) geeignet ist, n Zeichen (6), umfassend mindestens die Zeichen, die in dem Authentifizierungscode enthalten sind, n unter m Zonen (5) des Erfassungsmittels (4) zuzuordnen, und
wobei die Verarbeitungseinheit (2) ferner geeignet ist, auf dem Anzeigemittel (3) eine Darstellung (7) der Zuordnung der n Zeichen (6) zu den n unter m Zonen (5) des Erfassungsmittels (4) anzuzeigen,
wobei die Vorrichtung (1) **dadurch gekennzeichnet ist, dass** das Erfassungsmittel (4) abnehmbar ist und von einem Benutzer der Vorrichtung während der Verwendung bereitgestellt wird,
wobei das Erfassungsmittel (4) geeignet ist, der Verarbeitungseinheit (2) eine Kartographie (10) seiner m Zonen (5) anzuzeigen.

2. Vorrichtung gemäß Anspruch 1, bei der das Erfassungsmittel (4) eine Tastatur, eine elektronische Vorrichtung, umfassend eine Tastatur, wie ein Telefon, einen PDA, einen Computer, eine elektronische Vorrichtung, die geeignet ist, eine Tastatur zu emulieren, wie ein Telefon mit Touchscreen oder einen Tablet-PC, oder eine elektronische Vorrichtung, umfassend Tasten/Knöpfe, wie einen MP3-Leser oder einen Joystick, umfasst.

3. Vorrichtung gemäß Anspruch 1 oder 2, bei der das Erfassungsmittel (4) eine Mikrochipkarte (8) umfasst, die mit einer taktilen Matrix (9) ausgestattet ist.

4. Vorrichtung gemäß einem der Ansprüche 1 bis 3, bei der die Verarbeitungseinheit (2) ferner geeignet ist, eine Darstellung (11) einer Kartographie (10) der m Zonen (5) des Erfassungsmittels (4) auf dem Anzeigemittel (3) in Verbindung mit der Darstellung (7) der Zuordnung anzuzeigen.

5. Vorrichtung gemäß einem der Ansprüche 1 bis 4, bei der die Zuordnung (7) der n Zeichen (6) zu den n unter m Zonen (5) des Erfassungsmittels (4) nach jeder Erfassung, nach einer gegebenen Anzahl von Erfassungen oder nach einer gegebenen Dauer verändert wird.

6. Vorrichtung gemäß einem der Ansprüche 1 bis 5, bei der die Zuordnung (7) der n Zeichen (6) zu den n unter m Zonen (5) des Erfassungsmittels (4) zufällig erfolgt.

7. Vorrichtung gemäß einem der Ansprüche 1 bis 6, bei der das Erfassungsmittel (4) ein gesichertes Mittel ist.

8. Vorrichtung gemäß einem der Ansprüche 1 bis 7, bei der das Erfassungsmittel (4) an die Verarbeitungseinheit (2) über eine gesicherte Verbindung (12) anschließbar ist.

9. Vorrichtung gemäß einem der Ansprüche 1 bis 8, bei der die Verarbeitungseinheit (2) ferner geeignet ist, eine Authentifizierung des Erfassungsmittels (4) vor jeglichem mit der Erfassung verbundenen Vorgang durchzuführen.

10. Vorrichtung gemäß einem der Ansprüche 1 bis 9, bei der das Erfassungsmittel (4) geeignet ist, eine Authentifizierung der Verarbeitungseinheit (2) vor jeglichem mit der Erfassung verbundenen Vorgang durchzuführen.

## Claims

1. A device (1) for inputting an authentication code, comprising a processing unit (2), a display unit (3) connected to the processing unit (2) and a capture means (4) which may be connected to the processing unit (2),
the capture means (4) comprising m distinct actuatable areas (5) in a detectable way and identifiable by the processing unit (2),
the processing unit (2) being able to assign n characters (6), comprising at least the characters contained in authentication code, to n from among m areas (5) of the capture means (4), and
the processing unit (2) being further able to display on the display means (3) an illustration (7) of the assignment of said n characters (6) to n from among m areas (5) of the capture means (4),
said device (1) being **characterized in that** the capture means (4) is removable and provided by a user of the device during use,
the capture means (4) being able to indicate to the processing unit (2) a mapping (10) of its m areas (5).

2. The device according to claim 1, wherein the capture means (4) comprises a keyboard, an electronic device comprising a keyboard, such as a telephone, a PDA, a computer, an electronic device able to emulate a keyboard, such as a telephone with a touchscreen or a PC tablet, or an electronic device comprising keys/buttons, such as a MP3 reader or a gamepad.

3. The device according to claim 1 or 2, wherein the capture means (4) comprises a microcircuit card (8) equipped with a tactile matrix (9).

4. The device according to any one of claims 1 to 3, wherein the processing unit (2) is further able to display a representation (11) of a mapping (10) of the m areas (5) of the capture means (4) on the display means (3), in connection with the representation (7) of the assignment.

5. The device according to any one of claims 1 to 4, wherein the assignment (7) of the n characters (6) to the n from among m areas (5) of the capture means (4) is modified after each input, after a given number of inputs, or after a given period.

6. The device according to any one of claims 1 to 5, wherein the assignment (7) of the n characters (6) to the n from among m areas (5) of the capture means (4) is produced randomly.

7. The device according to any one of claims 1 to 6, wherein the capture means (4) is a secure means.

8. The device according to any one of claims 1 to 7, wherein the capture means (4) may be connected to the processing unit (2) via a secure link (12).

9. The device according to any one of claims 1 to 8, wherein the processing unit (2) is further able to perform an authentication of the capture means (4), before any operation related to the input.

10. The device according to any one of claims 1 to 9, wherein the capture means (4) is able to perform an authentication of the processing unit (2), before any operation related to the input.
